# EUROPEAN PATENT SPECIFICATION

(11) **EP 2 008 950 B1**
(45) Date of publication and mention of the grant of the patent: **15.06.2011**
(21) Application number: 08158789.1
(22) Date of filing: 23.06.2008
(51) Int. Cl.: B65G 1/04, B65G 1/06

(54) **Device for the automatic storage of a load unit in a storage rail**
Vorrichtung zum automatischen Lagern einer Ladungseinheit auf einer Lagerschiene
Disposition pour le stockage automatique d'une unité de charge dans un rail de rangement

(30) Priority: 26.06.2007 IT BG20070035
(43) Date of publication of application: 31.12.2008
(73) Proprietor: Automha S.r.l., 24052 Azzano S. Paolo (BG) (IT)
(72) Inventor: Del Popolo, Paolo, 24040 Levate (BG) (IT)
(74) Representative: Giavarini, Francesco

(56) References cited:
- AT-U1- 7 749
- DE-A1- 2 443 827
- DE-A1- 4 330 795
- DE-U1- 20 307 005
- US-A1- 2005 118 003

## Description

The present invention relates to a device for the automatic storage of a load unit in a storage rail which can, for example, be a rail of an automated warehouse.

During the last few years the use of automated warehouses structured to allow automatic storage of load units has become widespread. Among the different types of automated warehouses those commonly referred to as "drive in" are in particular demand. These warehouses are designed to store products with cyclical movement and employ load-bearing structures combined with specific movement and guide systems for the load units. As it is known, drive-in racks allow better use to be made of space compared to other types of racks as, for example, they eliminate picking aisles. Warehouses of this type also prove to be extremely productive when a great many load units with the same item code are moved in sequence, for example, according to the well-known LIFO (Last in First out) operating mode.

Therefore, from a constructional viewpoint, drive-in racks comprise a structure with frames and uprights that define a plurality of storage rails of dimensions variable in relation to the loads to be stored. In the most modem versions, load units are placed/picked on/from these rails using automatic devices. In practice, these devices place, automatically and in series, a plurality of load units on the supporting guides provided on opposite sides along the storage rail. In greater detail, this placing is implemented starting from one end of a rail or in any case from the first free position identified on this rail. The load unit is placed on the device by an operator or, alternatively, by automatic means. The device maintains the load lifted with respect to the supporting guides until it reaches the storage position. Subsequently, the device lowers the load so that it is resting on these guides.

These devices naturally also allow picking of the load units present on the rail according to corresponding methods.

The prior art comprises document DE 43 30 795 A1. An example of a prior art storage device is described in the patent application WO 2004/039701. In particular, this device essentially comprises a frame supported by a plurality of moving wheels. A platform is provided to support a load unit, while a lifting system allows the platform and consequently the load to be lifted during movement of the carriage along the storage rail. More precisely, the lifting system employed, by exerting leverage on the wheels, lifts not only the pallet and the load, but also the frame. In other words, by virtue of complex kinematic mechanisms, this lifting system in substance lifts all the masses involved except the moving wheels.

This lifting principle is evidently unfavourable for various reasons. Firstly, it is evident that to perform its function, i.e. to lift all the masses involved, the kinematic mechanism employed is evidently complex and difficult to produce due to the stresses it requires to withstand. This aspect obviously needs unfavourably high manufacturing and assembly costs.

Another negative aspect of the storage device in question is identified in relation to the reliability and duration that are greatly influenced by the stresses to which the mechanical parts of the lifting system are subjected. It is clear that the decision to lift all the masses has a negative effect on these aspects, consequently leading to other disadvantages, such as the need to perform relatively frequent servicing and maintenance operations aimed at remedying deterioration and wear of the components forming the lifting mechanism.

Another negative aspect of the storage device in question, also common to other devices known in the sector, lies in the fact that when lifting a load unit it often comes into contact with (i.e. rubs against) an adjacent load unit positioned on the guide. This operating fault occurs as lifting always takes place exclusively in a vertical direction. It is evident that the relatively forceful contact between two load units must be considered a disadvantage, both in relation to the integrity of the load unit and to possible movements that could derive from these contacts.

On the basis of these considerations, there is clearly the need to provide a device for automatic storage of load units that are more efficient than current ones both in terms of manufacturing and assembly costs and in terms of performances and reliability. Therefore, the principle object of the subject matter of the present invention is to provide a device for automatic storage of a load unit that allows the aforesaid problems to be overcome.

Within this aim, an object of the present invention is to provide a device that presents a compact and easy to produce configuration.

Another object of the present invention is to provide a device that prevents, during lifting of a first load unit, contact with a second load unit present on the rail.

A further object of the subject matter of the present invention is to provide a device for automatic storage of a load unit which is highly reliable and easy to manufacture at competitive costs.

This aim, and said and other relative objects that will be more apparent below, are achieved through an automatic storage device of a load unit comprising a body provided with a plurality of wheels suitable to allow translation of the device along a storage rail. First movement means are provided inside the body to produce translation of the device.

The device according to the invention is characterized in that it comprises a pair of operating portions provided on opposite sides of the body. These operating portions define the supports for the load units. The device also makes use of second movement means provided inside the body and operatively connected to the operating portions to allow movement thereof, with respect to the body, between a base position and a lifted position. In particular, this movement takes place so that the body of the device maintains a fixed position with respect to the wheels for translation.

Among the various advantageous aspects of the present invention, it can be observed that the operating principle of the device is based on the fact of lifting only the masses strictly necessary to allow operation of the device. In other words the masses moved are the mass of the load unit and the mass of the two operating portions on which this load unit rests. The use of two such operating portions is in fact sufficient to provide stable supports for the load unit without having to use a platform conventionally employed for this purpose. The second movement means therefore only lift the load unit and the portions on which these rest without lifting the frame and the other auxiliary masses associated therewith.

Naturally, the decrease in the masses involved during lifting implies, with the same load unit, less stress on the structural parts with evident advantages from the viewpoint of reliability and duration of the device.

According to another aspect of the present invention, the second movement means are operated mechanically and are structured through kinematic mechanisms which allow lifting of the load unit accompanied by a movement according to a direction orthogonal to that of lifting. This solution is particularly advantageous as it prevents lateral contact between two load units during picking on the rail. The kinematic mechanisms employed within the present invention also allow perfectly balanced lifting of the operating portions on which the load units rest, unlike many of the conventional solutions, such as those that use oleodynamic means to lift the platform.

Further characteristics and advantages of the invention will be more apparent during the description of preferred, although non-exclusive, embodiments of the device for the storage of a load unit according to the invention shown by way of non-limiting example in the accompanying drawings, wherein:
- Figures 1 and 1A show perspective views, in different operating conditions, of a first embodiment of a storage device according to the present invention;
- Figures 2, 2A and 2B are respectively a plan view and two side views of the storage device shown in Figures 1 and 1A;
- Figure 3 is a further perspective view of the device shown in Figures 1 and 1A;
- Figures 4 and 4A are perspective views, in different operating conditions, of a second embodiment of a storage device according to the present invention;
- Figure 5 and 5A are side views respectively corresponding to the operating conditions of the device according to the invention shown in Figures 4 and 4A;
- Figures 6 and 6A are front views respectively corresponding to the operating conditions of the device according to the invention shown in Figures 4 and 4A;
- Figures 7 and 7A are sectional views according to the lines IV-IV and V-V respectively indicated in Figures 2 and 2A;
- Figure 8 is an exploded view of the storage device according to the invention shown in Figures 4 and 4A;
- Figure 9 is a view of a first group of components of the storage device of Figure 8;
- Figure 10 is a perspective view of a second group of components of the storage device of Figure 8;
- Figure 11 is a plan view of the storage device of Figures 4 and 4A devoid of the cover and of the lifting portions;
- Figures 12 and 13 are views according the lines IX-IX and X-X indicated in Figure 11;
- Figures 14 and 14A are first side views showing the second movement means respectively in two different lifted positions;
- Figures 15 and 15A are further views showing, according to different observation points, the second movement means shown in Figures 14 and 14A.

With reference to the figures, the device 1 according to the invention comprises a body 6 provided with a plurality of wheels 10A, 10B provided to allow translation of the device 1 along a storage rail, for example a storage rail of an automated warehouse of the "drive-in" type. It must in any case be understood that the device can also be employed in other applications, i.e. in all these cases in which, for example, there is the need to automatically store a plurality of load units on a specific rail.

Translation of the device 1 along the storage rail is performed through first movement means 11 which are associated with the body 6 and at the same time operatively connected to one or more of said wheels 10A, 10B. In practice, the purpose of the first movement means 11 is to supply the energy required for movement of the wheels, and consequently of the device 1, along the storage rail.

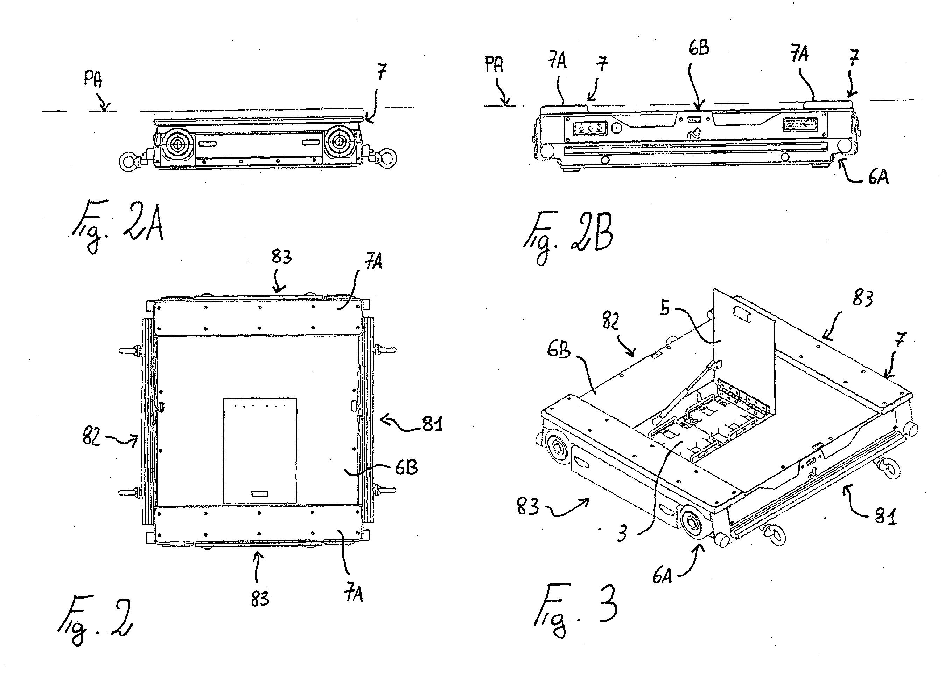

The device 1 according to the invention is characterized in that it comprises a pair of operating portions 7 positioned along opposite sides of the body 6. The operative portions 7 define a supporting plane PA (see Figures 2A and 2B) for a load unit by virtue of a flat supporting surface 7A thereof. The device 1 also comprises second movement means 31 associated with the body 6 and operatively connected to the operating portions 7 to allow movement thereof with respect to the body. In particular, these second means 31 are configured so as to move the operating portions 7 with respect to the body 6 between a first and a second lifting operating position which, as will be better specified below, are respectively characteristic of absence and presence of the load unit.

The device 1 according to the invention is also characterized in that the body 6 maintains a fixed position with respect to the wheels 10A, 10B during movement of the operating portions 7 between the two operating positions taken thereby. In other words, during movement of the operating portions 7, the position of the body 6 remains unvaried with respect to the axes of rotation of the wheels 10A, 10B. This technical solution appears extremely advantageous as the second movement means 31 only lift the masses of the operating portions 7 and of the load unit.

Unlike the case of some conventional devices, the body 6 and the wheels 10A, 10B in fact remain mutually fixed during operation of the second movement means 31. The masses of the two operating portions 7, moved by the second movement means 31, represent in substance the totality of the masses sufficient to allow the lifting operation of the device 1. This naturally makes it possible to limit the dimensions and performances required by the second movement means 31.

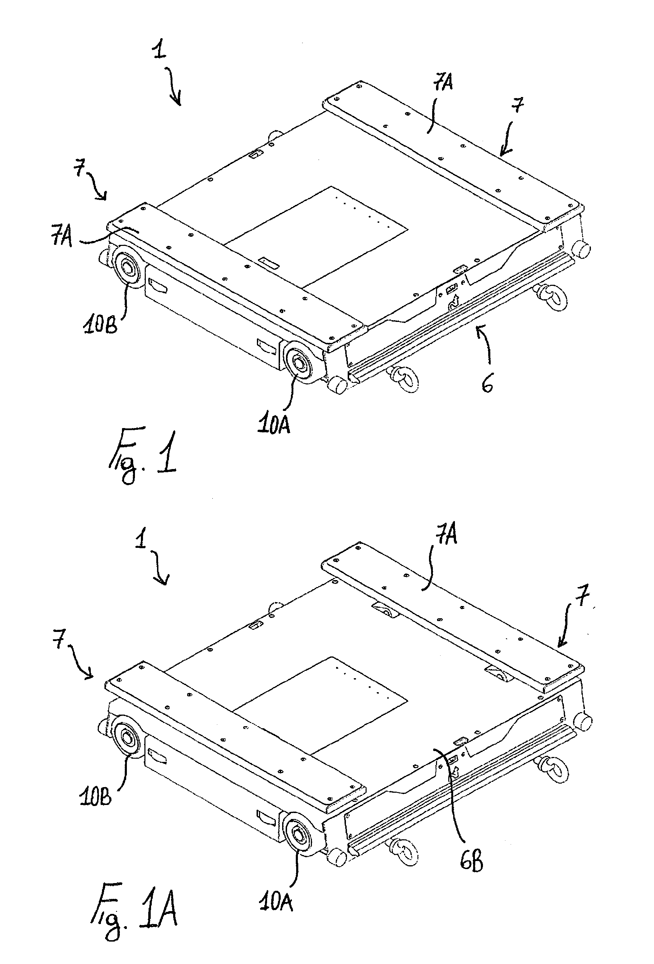

Figures 1 and 1A are views relative to a first possible embodiment of the device 1 according to the present invention. The device shown comprises a body 6 that is distinguished by a substantially prismatic configuration with a rectangular base. In particular, this configuration comprises a front side 81, a rear side 82 and a pair of lateral sides 83 that extend parallel to each other between the front side 81 and the rear side 82. The body 6 comprises a lower frame 6A, associated with which are the plurality of wheels 10A and 10B, to support several of the components of which the device 1 is composed. The body also comprises a cover 6B which is operatively connected to the frame 6A so as to close it at the top to define a compact casing inside which the majority of the components of the device 1 are contained.

Figure 3 shows a particular embodiment of the cover 6B, advantageously provided with a moving hatch 5 that allows access to the inside of the body 6 of the device, for example to replace the power supply unit 3, the function of which will be better described below.

Figures 1 and 1A respectively show the device 1 in a first and in a second configuration operatively defined by the position of the operating portions 1. In particular, the first operating position corresponds to a "base" position of the operating portions 7 taken when the device moves along the storage rail without lifting any load unit. The second operating position instead corresponds to a "lifted" position of the operating portions 7 taken when the device lifts the load unit to store it in or pick it up from the storage rail.

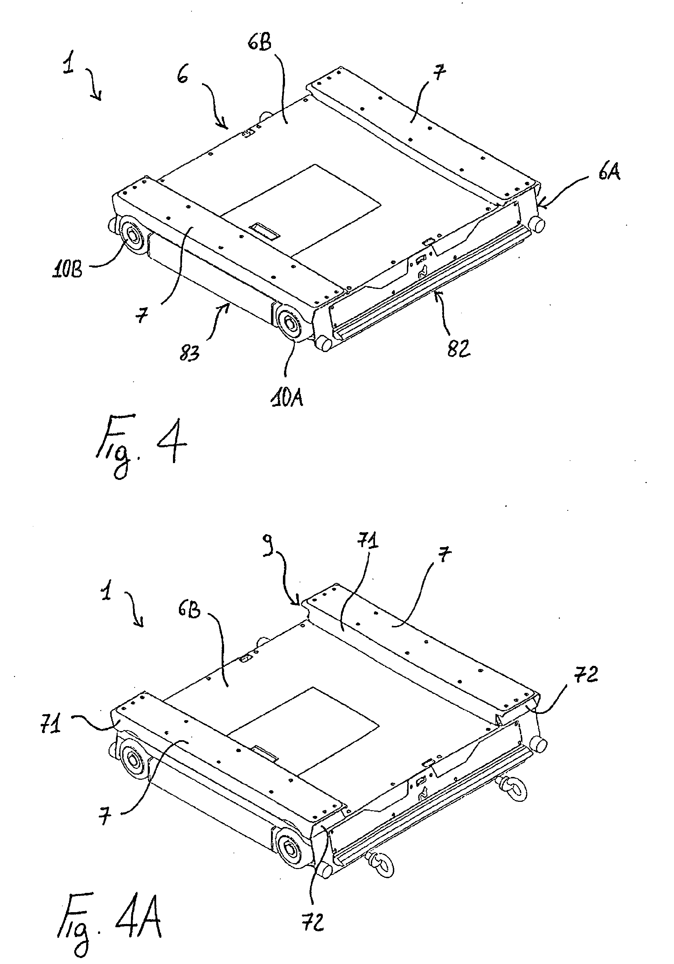

Figures 4 and 4A are perspective views relative to a preferred embodiment of the invention which differs from the previous one owing, for example, to the presence of protective means 9 associated with the operating portions 7 and better specified below in the description.

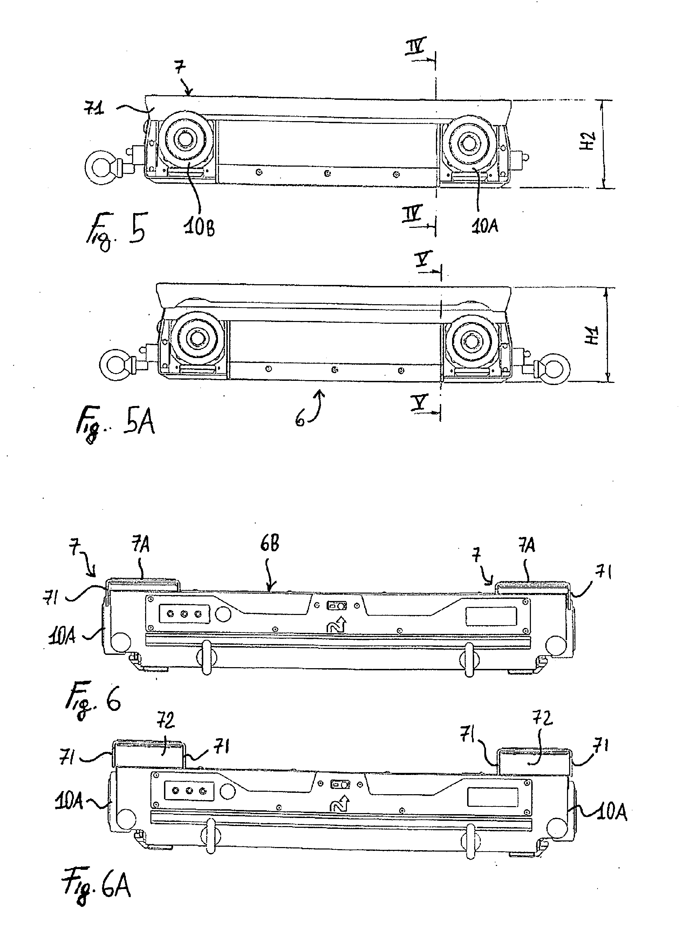

Figures 5 and 5A are side views of the device 1 respectively corresponding to the configurations shown in Figures 4 and 4A. By comparing the figures in question, it can be seen that in the second operating position (Figure 5A) the lifting portions 7 are positioned at a height H1 (measured with respect to the plane on which the wheels 10A, 10B rest) greater than the height H2 taken by these portions in the first operating position by virtue of the action of the second lifting means 31.

This relation can be deduced by comparing Figures 6 and 6A which are front views of the device 1 corresponding to the configurations shown in Figures 4 and 4A. From these figures, it can be seen that the operating portions 7, each comprise a supporting surface 7A which emerges from the cover 6B both when the corresponding operating portion is in the first operating position (hereunder also defined "base position"), and when it takes the second operating position (hereunder also defined "lifted position"). In an embodiment not shown, the supporting surfaces 7A could be positioned under the cover 6B once the operating portions 7 take the base position to then emerge in order to reach the lifted position.

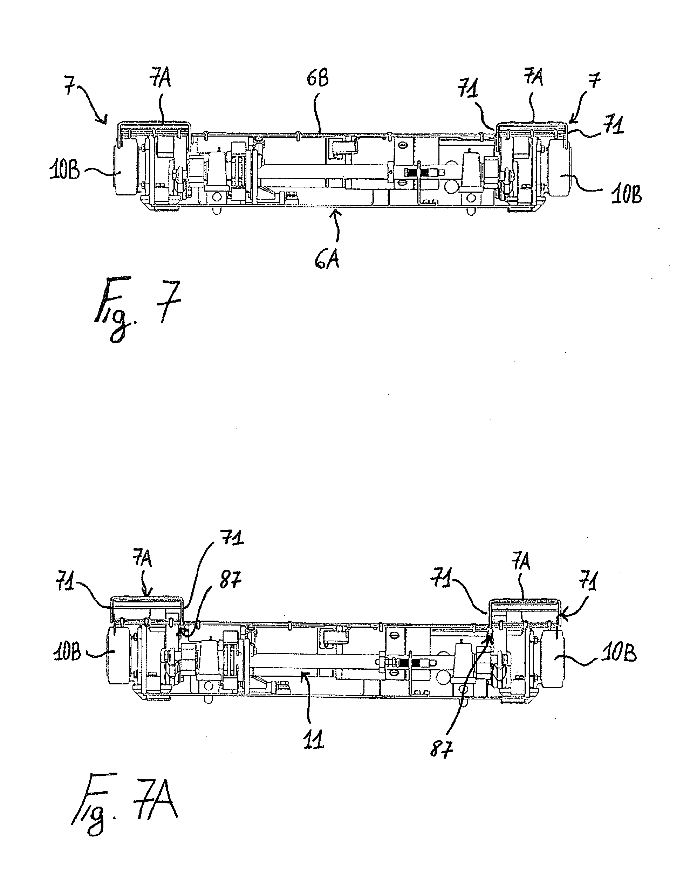

Figures 7 and 7A are sectional views according to the lines IV-IV and V-V respectively indicated in Figures 5 and 5A. As can be seen from these figures and as mentioned above, the device 1 comprises, for each operating portion 7, protective means 9 associated with the corresponding supporting surface 7A. These protective means are activated when the operating portions move from the "base" position to the "lifted" position in order to prevent access to the space below the supporting surfaces 7A. In other words, the protective means have the purpose of protecting the device 1 to prevent, for example, the entry of foreign bodies under the supporting surface during operation of the device 1.

With reference once again to Figures 4 and 4A, according to a preferred embodiment of the invention, the protective means 9 comprise, for each of said operating portions 7, a pair of lateral protections 71 and a pair of front protections 72. In particular, the lateral protections 72 extend from the corresponding supporting surface 7B of the operating portion 7 for the entire longitudinal extension thereof. Analogously, the front protections 72 extend from the supporting surface 7B along the transverse extension of the corresponding operating portion 7.

The lateral 71 and front 72 protections are such as to extend, during lifting of the operating portions 7 from the "base" position to the "lifted" position, between the cover 6B and the supporting surface so as to laterally and frontally prevent access to the space below the supporting surfaces 7A of the operating portions 7.

Figures 4 and 4a allow more detailed observation of a preferred embodiment of the protective means according to the present invention. In particular, in this embodiment the cover 6B extends under each supporting surface 7A and comprises one or more longitudinal slits 87 (i.e. substantially parallel to the lateral sides 83 of the body 6) into each of which one of the lateral protections 71 is inserted when the corresponding operating portion 7 is lowered from the "lifted" position to the "base" position (see Figures 7, 7B). In more detail, in the solution shown one of the two lateral protections 71 is inserted into a longitudinal slit 87, while the second is positioned so as to be adjacent to a lateral side 83 of the body 6.

Moreover, in this embodiment, the front protections 72 are formed by flexible elements, for example made of rubber, which are operatively connected at a first end thereof to the cover 6B and at a second end thereof to a front side of the corresponding supporting surface 7A. Through this solution when the portions are lifted, the flexible elements tend to prevent access from the front under the supporting surface 7A.

Naturally, the scope of the inventive concept also includes the possibility of the lateral portions being produced in the same manner as the front portions and vice versa, and also the possibility of producing these protections (both lateral and front) according to equivalent embodiments to those described above.

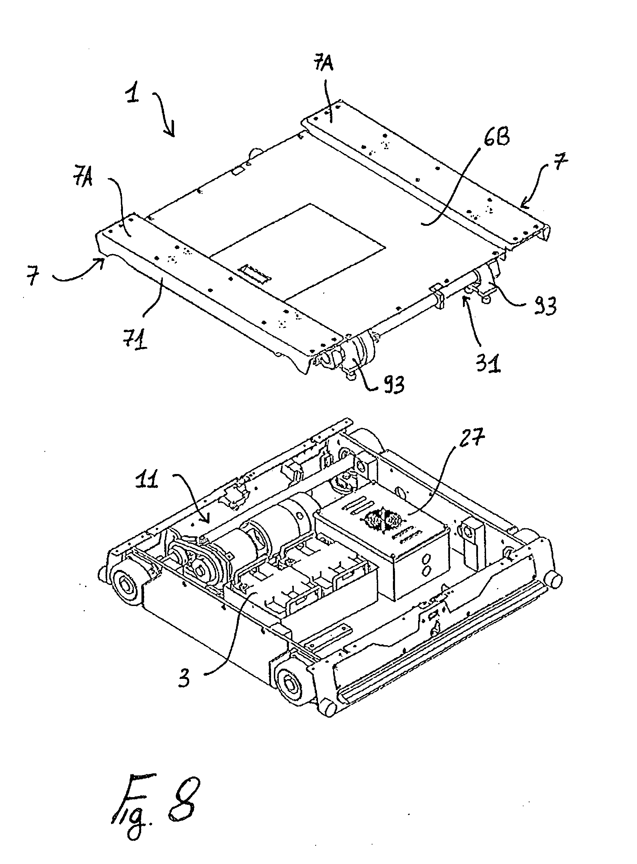

Figure 8 is an exploded view of the device 1 according to the invention which allows part of the components contained inside the body 6 to be observed. In order to control the first 11 and the second 31 movement means, the device 1 comprises a control unit 27 associated with the body 6 and detection means operatively connected to the control unit 27. More precisely, these detection means generate one or more control signals, each of which characteristic of an operating variable of the device 1. The term operating variable indicates, for example, the position of the device 1 with respect to the storage rail, or the position of the operating portions 7 with respect to the body 6. The control unit 27 naturally automatically controls the first and the second movement means 11, 31, as a function of these control signals. In turn, the control unit 27 can be programmed and controlled by an operator, for example through remote controls.

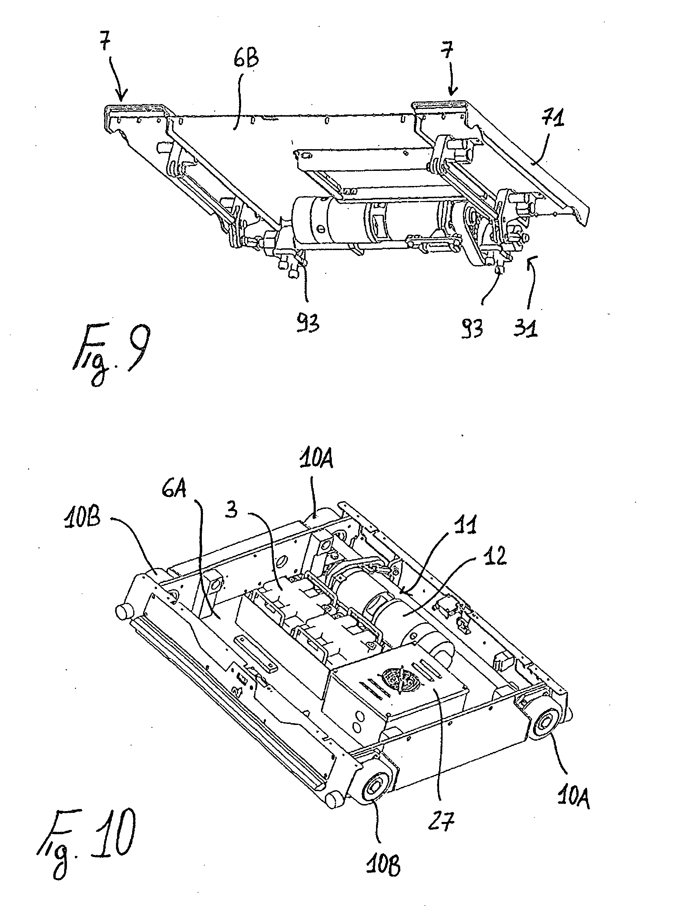

Figures 9 and 10 are perspective views of the device 1 shown in the exploded view of Figure 6, and respectively show a group of components essentially comprising the cover 6B, the operating portions 7, the protective means and the second movement means 31. Figure 10 instead shows the other components of the device according to the invention.

As already mentioned above, the first 11 and the second 31 movement means are both associated with the body 6. The expression "associated" is intended to indicate that these means move while remaining connected, at least with one part thereof, with the frame 6A. With reference in particular to Figures 5 and 7, according to a preferred embodiment of the invention, the device 1 comprises a power supply unit 3 (composed, for example, of a series of gel batteries to ensure operation even in refrigerated environments) associated with the frame 6A and operatively connected to the control unit 27, to the detection means, to the first 11 and to the second movement means 31.

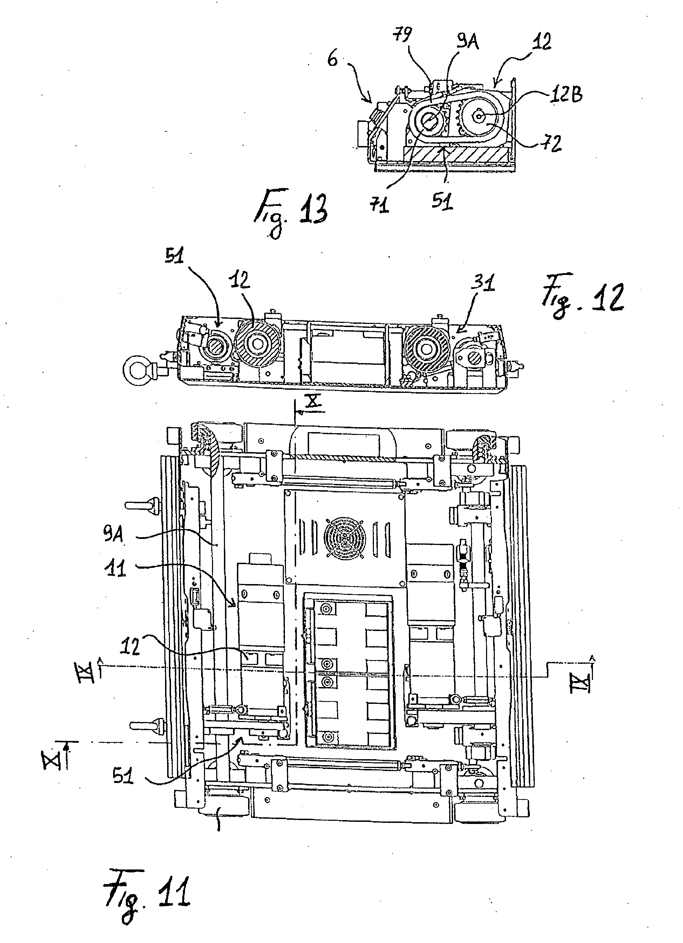

Figures 11 to 13 respectively show a plan view and two sectional views of the device 1 after the cover 6B and the operating portions 7 have been removed. In particular, the plan view allows the layout of the components inside the body 6 to be observed, while the sectional views 12 and 13 allow constructional details of the first 11 and of the second 31 movement means to be observed.

As shown, the first movement means 11 comprise a first actuator 12 (for example composed of an electric motor) operatively connected to one or more of said wheels 10A through first transmission means 51. These latter comprise a first rotating shaft 9A associated with the frame 6A of the body 6 and configured to support, at the ends thereof, a first pair of wheels 10A. The first transmission means 51 also comprise a first kinematic transmission that connects the first rotation shaft 9A to the first actuator 12, so that the first rotation shaft 9A is driven in rotation by the motion produced by the first actuator 12.

With reference in particular to the views of Figure 13, according to a preferred embodiment of the invention, the first kinematic chain comprises a transmission chain 79 that connects a first toothed wheel 71 keyed onto the first rotation shaft 9A and a second toothed wheel 72 keyed onto a motor shaft 12B of said first actuator 12. In practice, the motion of said motor shaft 12B is transferred to the first rotation shaft 9A through a transmission with substantially parallel axes. Rotation of the first motor shaft 9A is in turn translated into a rotation of the first pair of wheels 10A which in substance become "driving wheels" for the device 1.

In a possible alternative embodiment to that indicated and not shown, the first transmission means 51 could comprise a further kinematic transmission to operatively connect the first rotation shaft 9A to a second pair of wheels 10B each provided in a position substantially opposite the wheels of the first pair 10A or (as shown) along one of said lateral sides 83 in a position close to the front side 81. By means of this solution, the device 1 would in substance present four wheels that can be defined "driving" driven in rotation by a common actuator. This solution would naturally further increase the stability of the translational motion of the device 1.

From the solution shown, it can be understood that the first movement means 11 transfer motion to the driving wheels 10A (optionally also 10B) through the use of transmissions with parallel axes and making particular use of transmissions with flexible elements. It must be understood that these types of transmissions could naturally be replaced with others functionally equivalent, whose use must therefore also be considered as included in the scope of the inventive concept.

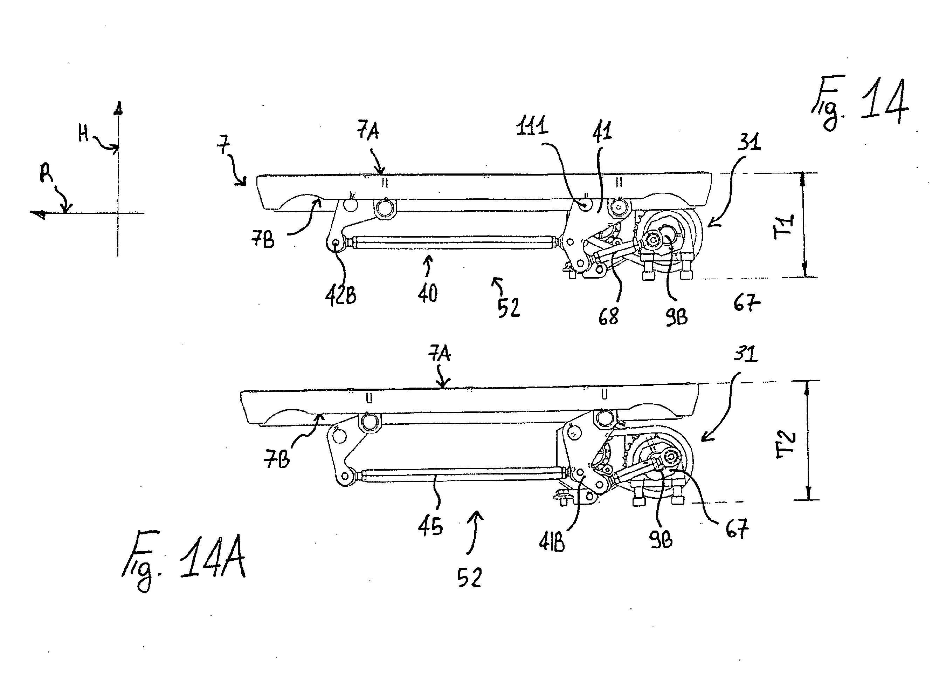

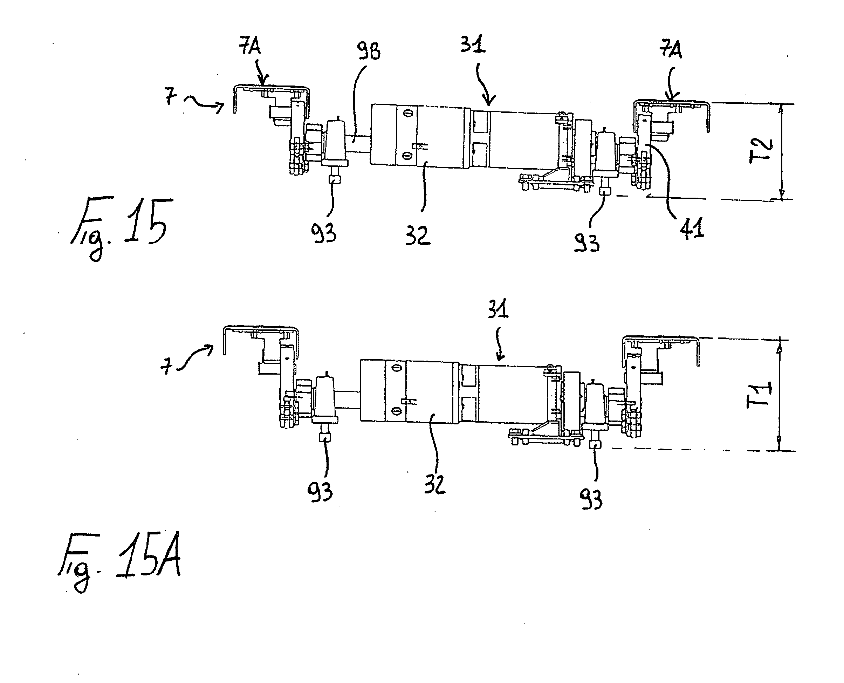

Figures 14, 14A, 15 and 15A show a possible configuration of the second movement means 31 which as indicated above allow movement of the operating portions 7 between the first and the second operating position. In more detail, Figures 14 and 15 show, according to different observation points, the second movement means 31 in one of the two operating positions (the "base" position), while Figures 14A and 15A show the same means in the other position (the "lifted" position).

According to the solution shown in these figures, the second movement means 31 comprise a second actuator 32 operatively connected to the operating portions 7 through second transmission means 52 so that the motion of the actuator is translated into a corresponding motion of the operating portions 7.

As shown, the second transmission means 52 comprise a second rotation shaft 9B associated with the frame 6A of the body 6 through a pair of supports 93 that in substance define the axis of rotation of the second shaft 9B. It must be stressed that the supports 93 are in actual fact a fixed part of the frame 6A, being stably connected thereto. In the figures in question, as also in Figures 8 and 9, these supports 93 are represented as separate from the frame 6A only for descriptive purposes. By comparing the Figures 10 and 1A, it can be seen that in the lifted position the operating portions 7 are positioned at the height T1 (measured with respect to the base of the supports 93) greater than the height T2 taken in the "base" position by virtue of the action of the second movement means 31.

The second transmission means 52 also comprise a kinematic structure that operatively connects the second rotation shaft 9B to the operating portions 7 and that is configured so as to transform rotation of the second shaft 9B into a translation of the operating portions 7 between the base position and the lifted position.

With reference in particular to Figures 14 and 14A, this kinematic structure comprises a pair of articulated mechanisms 40, each of which is operatively connected to one of the operating portions 7 on a lower surface 7B substantially opposite the supporting surface 7A intended to support the load unit. Each articulated mechanism 40 comprises a first 41 and a second 42 lever pivoted, at a first portion 41A, 42A thereof, respectively to a first 61 and to a second 62 supporting bushing (see Figure 4) provided on the frame 6A of the body 6. These bushings configure an axis of rotation 111 for each corresponding lever 41, 42.

The two levers 41 and 42 are mutually connected through a connection rod 45 at a second portion thereof 41B, 42B so that the movement of the one causes a corresponding movement of the other. Each of said levers 41, 42 comprises a third portion 41C, 42C connected to the lower surface 7B of the corresponding operating portion 7, preferably through an articulated connection such as the one shown in Figures 9A and 9B.

The kinematic structure also comprises a pair of crank-connecting rod mechanisms each of which is operatively connected to one of the articulated mechanisms 40 to transfer the rotational motion of the second motor shaft 9B to the corresponding articulated mechanism 40. Each crank-connecting rod mechanism comprises a crank 67 keyed onto the second rotation shaft 9B and a connecting rod 68 connected, at a first end 68A thereof to the crank 67 and at a second end 68B thereof to one of the two levers 41, 42 of one of the two articulated mechanisms 40. The operating principle of the kinematic structure is easily understood by comparing Figures 10 and 10A. The second actuator 12 drives the second shaft 9B in rotation, which in turn drives the crank 67 in rotation. This latter, through the connecting rod 68 determines a rotation of the first lever 41 about the corresponding axis of rotation 111. As a result of the connection rod 45, the second lever 42 also rotates about its axis of rotation 111 concordantly with the first lever 41. Rotation of the two levers 41, 42, determines a movement of the corresponding operating portion 7 with respect to the centres of rotation of these levers or with respect to the frame 6A of the body 6.

The embodiment of the second movement means thus configured allows totally reliable movement of the operating portions 7 by virtue of the operating principle and of the configuration of the elements forming the kinematic structure for transmitting motion. In particular, the structure of the articulated mechanisms 40 performs a translation of the operating portions 7 on a plane substantially orthogonal to the supporting surface 7A of these portions. More precisely, this translation determines a lifting/lowering H of the operating portions 7 with respect to the frame 6A of the body 6, but also a simultaneous movement of the portions 7 according to a direction R orthogonal to the lifting direction H. This solution appears extremely advantageous as it avoids, for example, lateral contact (for example by rubbing) between two adjacent load units. This advantage is particularly evident during picking of the load units. In fact, during picking the device 1 lifts a load unit with respect to the frame 6A of the body 6, moving the unit away from the adjacent unit.

The technical solutions adopted for the device according to the present invention allow the set aims and objects to be fully achieved. The device thus conceived is extremely reliable by virtue of a lifting principle that advantageously allows stresses involving structural parts to be limited. The device is also distinguished by a simple configuration, extremely compact and easy to produce, which advantageously allows both manufacturing and assembly costs to be limited.

In practice, the materials employed and the contingent dimensions and forms can be any according to requirements and to the state of the art.

## Claims

1. Device (1) for the automatic storage of a load unit comprising:
- a body (6) provided with a plurality of wheels (10A, 10B) suitable to allow translation of said device along a storage rail;
- first movement means (11) provided inside said body (6) and operatively connected to one or more of said wheels (10A, 10B) to produce said translation of said device (1),
said device (1) comprising a pair of operating portions (7) provided on opposite sides of said body (6), said operating portions (7) defining a supporting plane (PA) for said load unit, said device (1) comprising second movement means (31) provided inside said body (6) and operatively connected to said operating portions (7) said second movement means (31) moving said operating portions (7) with respect to said body (6) between a base position and a lifted position, said body (6) maintaining a fixed position with respect to said wheels (10A, 10B) during movement of said operating portions (7),
**characterized in that** said body (6) comprises a lower frame (6A) associated with which are said plurality of wheels (10), said body (6) comprising a cover (6B) which closes said frame (6A) at the top, said operating portions (7) emerging from said cover (6B) when they take said lifted position.

2. Device (1) according to claim 1, **characterized in that** each of said operating portions (7) is defined by a supporting surface (7A) which emerges from said cover (6B) when this operating portion (7) takes said lifted position and/or said base position.

3. Device (1) according to claim 2, **characterized in that** it comprises, for each operating portion (7), protective means (9) associated with a corresponding supporting surface (7A), said protective means (9) being activated when said operating portions (7) move from said base position to said lifted position, said protective means (9) preventing access to the space below said supporting surface (7A).

4. Device (1) according to claim 3, **characterized in that** said protective means (9) comprise, for each of said operating portions (7), a pair of lateral protections (71) which extend from said supporting surface (7B) along the entire longitudinal extension of the corresponding operating portion (7), said protective means (9) comprising a pair of front protections (72) extending from said supporting surface (7A) along the entire transverse extension of the corresponding operating portion (7).

5. Device (1) according to claim 4, **characterized in that** said cover (6B) of said body (6) extends under each supporting surface (7B) of said operating portion (7), said cover (6B) comprising one or more longitudinal slits (87) into each of which one of said lateral protections (71) is inserted.

6. Device (1) according to claim 5, **characterized in that** said front protections (72) comprise flexible elements operatively connected at a first end thereof to said cover (6B) and at a second end thereof to said supporting surface (7A) of said operating portion (7).

7. Device (1) according to one or more of claims 1 to 6, **characterized in that** it comprises a control unit (27) associated with said frame (6A) of said body (6) to control said first and said second movement means (11, 31), said device (1) comprising detection means operatively connected to said control unit (27) to generate one or more control signals, each characteristic of an operating variable of said device (1), said control unit (27) controlling said first and said second movement means as a function of said control signals.

8. Device (1) according to one or more of claims 1 to 7, **characterized in that** it comprises a power supply unit (3) associated with said frame (6A) of said body (6) and operatively connected to said control unit (27), to said detection means and to said first and second movement means (11, 31), said power supply unit being accessible through a moving hatch (5) provided on said cover (6B).

9. Device (1) according to one or more of claims 1 to 8, **characterized in that** said first movement means (11) comprise a first actuator (12) operatively connected to one or more of said wheels (10A) through first transmission means (51).

10. Device (1) according to claim 9, **characterized in that** said first transmission means (51) comprise a first rotation shaft (9A) associated with said frame (6), at least a pair of wheels (10A) being keyed onto said first rotation shaft (9A), which is driven in rotation by said first actuator (12), said first transmission means (51) comprising a first kinematic transmission that connects said first rotation shaft (9A) to said first actuator (12).

11. Device (1) according to claim 10, **characterized in that** said first kinematic transmission comprises a first transmission chain (79) that connects a first toothed wheel (71) keyed onto said first rotation shaft (9A) to a second toothed wheel (72) keyed onto a shaft (12B) of said first actuator.

12. Device (1) according to one or more of claims 1 to 11, **characterized in that** said second movement means (31) comprise a second actuator (32) operatively connected to said operating portions (7) through second transmission means (52).

13. Device (1) according to claim 12, **characterized in that** said second transmission means (52) comprise a second rotation shaft (9B) associated with said frame (6A) of said body (6) and operatively connected to said second actuator (32), said second transmission means (52) comprising a kinematic structure that operatively connects said second rotation shaft (9B) to said operating portions (7), said kinematic structure being configured so as to transform the rotation of said second shaft (9B) into a translation of said operating portions (7) between said base position and said lifted position.

14. Device (1) according to claim 13, **characterized in that** said kinematic structure comprises:
- a pair of articulated mechanisms (40), each associated with a lower surface (7B) of one of said operating portions (7) substantially opposite the supporting surface (7A) of said load unit, each of said articulated mechanisms (40) comprising a first (41) and a second (42) lever pivoted at a first portion (41A, 42A) thereof respectively to a first (61) and to a second (62) part of said frame (6A) of said body (6), a second portion (41B) of said first lever (41) being connected to a corresponding second portion (42B) of said second lever (42) through a connection rod (45), said levers (41, 42) each comprising a third end portion (41C, 42C) connected to said lower surface (7B) of a corresponding operating portion (7);
- a pair of crank-connecting rod mechanisms each of which is operatively connected to one of said articulated mechanisms (40), each of said crank-connecting rod mechanisms comprising a crank (67) keyed onto said second rotation shaft (9B) and a connecting rod (68) connected, at a first end (68A) thereof to said crank (67) and at a second end (68B) thereof to one of said two levers (41, 42) of one of said articulated mechanisms (40).

## Patentansprüche

1. Vorrichtung (1) zum automatischen Verstauen einer Ladeeinheit, aufweisend:
- einen Körper (6), der mit einer Vielzahl von Rädern (10A, 10B) versehen ist, die in der Lage sind, eine Positionsänderung der Vorrichtung entlang einer Lagerschiene zu ermöglichen;
- ein erstes Bewegungsmittel (11), das innerhalb des Körpers (6) vorgesehen ist und das betriebsmäßig mit einem oder mehreren der Räder (10A, 10B) verbunden ist, um die Positionsänderung der Vorrichtung (1) zu bewirken,
wobei die Vorrichtung (1) ein Paar Arbeitsabschnitte (7) aufweist, die an einander gegenüber liegenden Seiten des Körpers (6) vorgesehen sind, wobei die Arbeitsabschnitte (7) eine Auflageebene (PA) für die Ladeeinheit definieren, wobei die Vorrichtung (1) ein zweites Bewegungsmittel (31) aufweist, das innerhalb des Körpers (6) vorgesehen ist und das betriebsmäßig mit den Arbeitsabschnitten (7) verbunden ist, wobei das zweite Bewegungsmittel (31) die Arbeitsabschnitte (7) in Bezug auf den Körper (6) zwischen einer Basisstellung und einer Hubstellung bewegt, wobei der Körper (6) während der Bewegung der Arbeitsabschnitte (7) seine Stellung in Bezug auf die Räder (10A, 10B) nicht verändert,
**dadurch gekennzeichnet, dass** der Körper (6) einen unteren Rahmen (6A) aufweist, dem die Vielzahl von Rädern (10) zugeordnet ist, wobei der Körper (6) eine Abdeckung (6B) aufweist, die den Rahmen (6A) von oben her verschließt, wobei die Arbeitsabschnitte (7) über die Abdeckung (6B) vorstehen, wenn sie die Hubstellung einnehmen.

2. Vorrichtung (1) nach Anspruch 1, **dadurch gekennzeichnet, dass** jeder der Arbeitsabschnitte (7) von einer Auflagefläche (7A) definiert ist, die über die Abdeckung (6B) vorsteht, wenn dieser Arbeitsabschnitt (7) die Hubstellung und/oder die Basisstellung einnimmt.

3. Vorrichtung (1) nach Anspruch 2, **dadurch gekennzeichnet, dass** sie für jeden Arbeitsabschnitt (7) ein Schutzmittel (9) aufweist, das einer entsprechenden Auflagefläche (7A) zugeordnet ist, wobei das Schutzmittel (9) aktiviert ist, wenn die Arbeitsabschnitte (7) sich von der Basisstellung in die Hubstellung bewegen, wobei das Schutzmittel (9) einen Zugang zum Raum unterhalb der Auflagefläche (7A) verhindert.

4. Vorrichtung (1) nach Anspruch 3, **dadurch gekennzeichnet, dass** das Schutzmittel (9) für jeden der Arbeitsabschnitte (7) ein Paar Flanken-Schutzeinrichtungen (71) aufweist, die sich ausgehend von der Auflagefläche (7B) entlang der gesamten Längenabmessung des entsprechenden Arbeitsabschnitts (7) erstrecken, wobei das Schutzmittel (9) ein Paar Stirnseiten-Schutzeinrichtungen (72) aufweist, die sich ausgehend von der Auflagefläche (7A) entlang der gesamten Breitenabmessung des entsprechenden Arbeitsabschnitts (7) erstrecken.

5. Vorrichtung (1) nach Anspruch 4, **dadurch gekennzeichnet, dass** die Abdeckung (6B) des Körpers (6) sich jeweils unterhalb der Auflageflächen (7B) des Arbeitsabschnitts (7) erstreckt, wobei die Abdeckung (6B) einen oder mehrere Längsschlitze (87) aufweist, in die jeweils eine der Flankenschutzeinrichtungen (71) gesteckt ist.

6. Vorrichtung (1) nach Anspruch 5, **dadurch gekennzeichnet, dass** die Stirnseiten-Schutzeinrichtungen (72) flexible Elemente aufweisen, die mit einem ersten Ende betriebsmäßig mit der Abdeckung (6B) verbunden sind und die mit einem zweiten Ende mit der Auflagefläche (7A) des Arbeitsabschnitts (7) verbunden ist.

7. Vorrichtung (1) nach einem oder mehreren der Ansprüche 1 bis 6, **dadurch gekennzeichnet, dass** sie eine Steuereinheit (27) aufweist, die dem Rahmen (6A) des Körpers (6) zugeordnet ist, um das erste und das zweite Bewegungsmittel (11, 31) zu steuern, wobei die Vorrichtung (1) ein Erfassungsmittel aufweist, das betriebsmäßig mit der Steuereinheit (27) verbunden ist, um eines oder mehrere Steuersignale zu erzeugen, die jeweils charakteristisch sind für eine Betriebsvariable der Vorrichtung (1), wobei die Steuereinheit (27) die ersten und zweiten Bewegungsmittel als Funktion der Steuersignale steuert.

8. Vorrichtung (1) nach einem oder mehreren der Ansprüche 1 bis 7, **dadurch gekennzeichnet, dass** sie eine Leistungszufuhreinheit (3) aufweist, die dem Rahmen (6A) des Körpers (6) zugeordnet ist und die betriebsmäßig mit der Steuereinheit (27), mit dem Erfassungsmittel und mit den ersten und zweiten Bewegungsmitteln (11, 31) verbunden ist, wobei die Leistungszufuhreinheit über eine bewegliche Klappe (5), die in der Abdeckung (6B) vorgesehen ist, zugänglich ist.

9. Vorrichtung (1) nach einem oder mehreren der Ansprüche 1 bis 8, **dadurch gekennzeichnet, dass** das erste Bewegungsmittel (11) ein erstes Stellglied (12) aufweist, das über ein erstes Getriebemittel (51) betriebsmäßig mit einem oder mehreren der Räder (10A) verbunden ist.

10. Vorrichtung (1) nach Anspruch 9, **dadurch gekennzeichnet, dass** das erste Getriebemittel (51) eine erste drehende Welle (9A) aufweist, die dem Rahmen (6) zugeordnet ist, wobei mindestens ein Paar Räder (10A) auf die erste drehende Welle (9A) gekeilt sind, die vom ersten Stellglied (12) drehend angetrieben wird, wobei das erste Getriebemittel (51) ein erstes kinematisches Getriebe umfasst, das die erste drehende Welle (9A) mit dem ersten Stellglied (12) verbindet.

11. Vorrichtung (1) nach Anspruch 10, **dadurch gekennzeichnet, dass** das erste kinematische Getriebe eine erste Getriebekette (79) umfasst, die ein erstes Zahnrad (71), das auf die erste drehende Welle (9A) gekeilt ist, mit einem zweiten Zahnrad (72) verbindet, das auf eine Welle (12B) des ersten Stellglieds gekeilt ist.

12. Vorrichtung (1) nach einem oder mehreren der Ansprüche 1 bis 11, **dadurch gekennzeichnet, dass** das zweite Bewegungsmittel (31) ein zweites Stellglied (32) aufweist, das über ein zweites Getriebemittel (52) betriebsmäßig mit den Arbeitsabschnitten (7) verbunden ist.

13. Vorrichtung (1) nach Anspruch 12, **dadurch gekennzeichnet, dass** das zweite Getriebemittel (52) eine zweite drehende Welle (9B) aufweist, die dem zweiten Rahmen (6A) des Körpers (6) zugeordnet ist und die betriebsmäßig mit dem zweiten Stellglied (32) verbunden ist, wobei das zweite Stellglied (52) eine kinematische Struktur aufweist, die die zweite drehende Welle (9B) betriebsmäßig mit den Arbeitsabschnitten (7) verbindet, wobei die kinematische Struktur so aufgebaut ist, dass sie die Drehung der zweiten Welle (9B) in eine Positionsänderung der Arbeitsabschnitte (7) zwischen einer Basisstellung und der Hubstellung übersetzt.

14. Vorrichtung (1) nach Anspruch 13, **dadurch gekennzeichnet, dass** die kinematische Struktur aufweist:
- ein Paar Gelenkmechanismen (40), von denen jeder einer Unterseite (7B) eines der Arbeitsabschnitte (7) zugeordnet ist und im Wesentlichen der Auflagefläche (7A) der Ladeeinheit gegenüber liegt, wobei jeder der Gelenkmechanismen (40) einen ersten (41) und einen zweiten (42) Hebel aufweist, von denen jeweils ein erster Abschnitt (41A, 42A) mit einem ersten (61) bzw. einem zweiten (62) Teil des Rahmens (6A) des Körpers (6) verschwenkbar verbunden ist, wobei ein zweiter Abschnitt (41B) des ersten Hebels (41) über ein Pleuel (45) mit einem entsprechenden zweiten Abschnitt (42B) des zweiten Hebels verbunden ist, wobei die Hebel (41, 42) jeweils einen dritten Endabschnitt (41C, 42C) aufweisen, der mit der Unterseite (7B) eines entsprechenden Arbeitsabschnitts (7) verbunden ist.
- ein Paar Kurbel/Pleuel-Mechanismen, von denen jeder betriebsmäßig mit einem der Gelenkmechanismen (40) verbunden ist, wobei jeder der Kurbel/Pleuel-Mechanismen eine Kurbel (67), die auf die zweite drehende Welle (9B) gekeilt ist, und ein Pleuel (68) aufweist, von dem ein erstes Ende (68A) mit der Kurbel (67) verbunden ist, und von dem ein zweites Ende (68B) mit einem der beiden Hebel (41, 42) eines der Gelenkmechanismen (40) verbunden ist.

## Revendications

1. Dispositif (1) pour le stockage automatique d'une unité de charge, comprenant :
- un corps (6) muni d'une pluralité de roues (10A, 10B), convenant pour permettre une translation dudit dispositif le long d'un rail de stockage ;
- des premiers moyens de déplacement (11), prévus à l'intérieur dudit corps (6) et connectés fonctionnellement à une ou plusieurs desdites roues (10A, 10B) pour produire ladite translation dudit dispositif (1),
ledit dispositif (1) comprenant une paire de parties d'actionnement (7), prévues sur des côtés opposés dudit corps (6), lesdites parties d'actionnement (7) définissant un plan support (PA) pour ladite unité de chargement, ledit dispositif (1) comprenant des deuxièmes moyens de déplacement (31), prévus à l'intérieur dudit corps (6) et connectés fonctionnellement auxdites parties d'actionnement (7), lesdits deuxièmes moyens de déplacement (31) déplaçant lesdites parties d'actionnement (7) par rapport audit corps (6), entre une position de base et une position levée, ledit corps (6) conservant une position fixe par rapport auxdites roues (10A, 10B) durant le déplacement desdites parties d'actionnement (7),
**caractérisé en ce que** ledit corps (6) comprend un châssis inférieur (6A), auquel sont associées ladite pluralité de roues (10), ledit corps comprenant un couvercle (6B) fermant ledit châssis (6A) en partie supérieure, lesdites parties d'actionnement (7) émergeant dudit couvercle (6B) lorsqu'elles se trouvent à ladite position levée.

2. Dispositif (1) selon la revendication 1, **caractérisé en ce que** chacune desdites parties d'actionnement (7) est définie par une surface support (7A), émergeant dudit couvercle (6B) lorsque cette partie d'actionnement (7) prend ladite position levée et/ou ladite position de base.

3. Dispositif (1) selon la revendication 2, **caractérisé en ce qu'**il comprend, pour chaque partie d'actionnement (7), des moyens protecteurs (9) associés à une surface support (7A) correspondante, lesdits moyens protecteurs (9) étant activés lorsque lesdites parties d'actionnement (7) se déplacent, de ladite position de base à ladite position levée, lesdits moyens protecteurs (9) empêchant l'accès à l'espace situé au-dessous de ladite surface support (7A).

4. Dispositif (1) selon la revendication 3, **caractérisé en ce que** lesdits moyens protecteurs (9) comprennent, pour chacune desdites parties d'actionnement (7), une paire de protection latérales (71) s'étendant à partir de ladite surface support (7B), le long de la totalité de l'étendue longitudinale de la partie d'actionnement (7) correspondante, lesdits moyens protecteurs (9) comprenant une paire de protections avant (72), s'étendant à partir de ladite surface support (7A), le long de la totalité de l'étendue transversale de la partie d'actionnement (7) correspondante.

5. Dispositif (1) selon la revendication 4, **caractérisé en ce que** ledit couvercle (6B) dudit corps (6) s'étend sous chaque surface support (7B) de ladite partie d'actionnement (7), ledit couvercle (6B) comprenant une ou plusieurs fentes longitudinale (87), dans chacune desquelles l'une desdites protections latérales (71) est insérée.

6. Dispositif (1) selon la revendication 5, **caractérisé en ce que** lesdites protections avant (72) comprennent des éléments flexibles, fonctionnellement connectés, à une première extrémité de ceux-ci, audit couvercle (6B) et, à une deuxième extrémité de ceux-ci, à ladite surface support (7A) de ladite partie d'actionnement (7).

7. Dispositif (7) selon l'une ou plusieurs des revendications 1 à 6, **caractérisé en ce qu'**il comprend une unité de commande (27), associée audit châssis (6A) dudit corps (6), pour commander lesdits premiers et deuxièmes moyens de déplacement (11, 31), ledit dispositif (1) comprenant des moyens de détection, fonctionnellement connectés à ladite unité de commande (27), pour générer un ou plusieurs signaux de commande, chacun étant caractéristique d'une variable de fonctionnement dudit dispositif (1), ladite unité de commande (27) commandant lesdites premiers et deuxièmes moyens de déplacement en fonction desdits signaux de commande.

8. Dispositif (1) selon l'une ou plusieurs des revendications 1 à 7, **caractérisé en ce qu'**il comprend une unité d'alimentation en énergie (3), associée audit châssis (6A) dudit corps (6) et fonctionnellement connectée à ladite unité de commande (27), auxdits moyens de détection et auxdits premiers et deuxièmes moyens de déplacement (11, 31), ladite unité d'alimentation en énergie étant accessible à travers un volet mobile (5) prévu sur ledit couvercle (6B).

9. Dispositif (1) selon l'une ou plusieurs des revendications 1 à 8, **caractérisé en ce que** lesdits premiers moyens de déplacement (11) comprennent un premier actionneur (12), fonctionnellement connecté à une ou plusieurs desdites roues (10A), par des premiers moyens de transmission (51).

10. Dispositif (1) selon la revendication 9, **caractérisé en ce que** lesdits premiers moyens de transmission (51) comprennent un premier arbre rotatif (9A), associé audit châssis (6), au moins une paire de roues (10A), clavetées sur ledit arbre rotatif (9A), entraîné en rotation par ledit actionneur (12), lesdits premiers moyens de transmission (51) comprenant une première transmission cinématique reliant ledit premier arbre rotatif (9A) audit premier actionneur (12).

11. Dispositif (1) selon la revendication 10, **caractérisé en ce que** ladite une première transmission cinématique comprend une première chaîne de transmission (79), reliant une première roue dentée (71), clavetée sur ledit premier arbre rotatif (9A), à une deuxième roue dentée (72), clavetée sur un arbre (12B) dudit premier actionneur.

12. Dispositif selon l'une ou plusieurs des revendications 1 à 11, **caractérisé en ce que** lesdits deuxièmes moyens de déplacement (31) comprennent un deuxième actionneur (32), fonctionnellement connecté auxdites parties d'actionnement (7) par des deuxièmes moyens de transmission (52).

13. Dispositif (1) selon la revendication 12, **caractérisé en ce que** lesdits deuxièmes moyens de transmission (52) comprennent un deuxième arbre rotatif (9B), associé audit châssis (6A) dudit corps (6) et fonctionnellement connecté audit deuxième actionneur (32), lesdits deuxièmes moyens de transmission (52) comprenant une structure cinématique reliant fonctionnellement ledit deuxième arbre rotatif (9B) auxdites parties d'actionnement (7), ladite structure cinématique étant configurée de manière à transformer la rotation dudit deuxième arbre rotatif (9B) en une translation desdites parties d'actionnement (7), entre ladite position de base et ladite position levée.

14. Dispositif (1) selon la revendication 13, **caractérisé en ce que** ladite structure cinématique comprend :
- une paire de mécanismes articulés (40), chacun associé à une surface inférieure (7B) d'une desdites parties d'actionnement (7), sensiblement opposée à la surface support (7A) de ladite unité de chargement, chacun desdits mécanismes articulés (40) comprenant un premier (41) et un deuxième (42) levier, monté à pivotement, en une premier partie (41A, 42A) de ceux-ci, respectivement, sur une première (61) et une deuxième (62) partie dudit châssis (6A) dudit corps (6), une deuxième partie (41B) dudit premier levier (41) étant reliée à une deuxième partie (42B) correspondante dudit deuxième levier (42), par l'intermédiaire d'une bielle (45), lesdits leviers (41, 42) comprenant chacun une troisième partie d'extrémité (41C, 42C) connectée à ladite surface inférieure (7B) d'une partie d'actionnement (7) correspondante ;
- une paire de mécanismes à bielle-manivelle, dont chacun est fonctionnellement connecté à l'un desdits mécanismes articulés (40), chacun desdits mécanismes à bielle-manivelle comprenant une manivelle (67), clavetée sur ledit arbre rotatif (9B), et une bielle (68), reliée, à une première extrémité (68A) de celle-ci, à ladite manivelle (67) et, à une deuxième extrémité (68B) de celle-ci, à l'un desdits leviers (41, 42) d'un desdits mécanismes articulés (40).
